(19) Europäisches Patentamt
European Patent Office
Office européen des brevets

(11) Veröffentlichungsnummer: **0 358 762 A1**

(12) # EUROPÄISCHE PATENTANMELDUNG veröffentlicht nach Art. 158 Abs. 3 EPÜ

(21) Anmeldenummer: 88905469.8

(22) Anmeldetag: 17.03.88

(86) Internationale Anmeldenummer: PCT/SU88/00062

(87) Internationale Veröffentlichungsnummer: WO 89/08394 (21.09.89 89/23)

(51) Int. Cl.5: A01N 37/02 , A01N 27/00 , A01N 31/04

(43) Veröffentlichungstag der Anmeldung: 21.03.90 Patentblatt 90/12

(84) Benannte Vertragsstaaten: CH DE FR GB IT LI

(71) Anmelder: VSESOJUZNY NAUCHNO-ISSLEDOVATELSKY INSTITUT SELSKOKHOZYAISTVENNOI BIOTEKHNOLOGII VSESOJUZNOI AKADEMII SELSKOKHOZYAISTVENNYKH NAUK IMENI V.I. LENINA
ul. Pskovskaya 12-4 Moscow, 127253(SU)

Anmelder: INSTITUT FIZIKO-ORGANICHESKOI KHIMII AKADEMII NAUK BELORUSSKOI SSR
ul. Surganova, 13
Minsk, 220603(SU)

(72) Erfinder: FEDIN, Marat Alexandrovich
ul. Dm.Ulyanova, 24-158
Moscow, 107078(SU)
Erfinder: KUZNETSOVA, Tatyana Alexandrovna
Khoroshevskoe shosse, 36b-62
Moscow, 123007(SU)
Erfinder: LYSENKOV, Viktor Ivanovich
ul. Yakubova, 30-366
Minsk, 220101(SU)
Erfinder: NOVIKOVA, Svetlana Alexandrovna
ul. Shirokaya, 19-2-176
Moscow, 129224(SU)
Erfinder: SAVCHUK, Valentin A.
Opytnaya stantsia VIR Globinsky raion
Poltavskaya obl. selo Ustimovka, 315967(SU)
Erfinder: SEDELNIKOV, Anatoly Ivanovich
ul. Turgeneva, 24b-54
Gorky, 603024(SU)
Erfinder: SHABUNYA, Vera Pavlovna
ul. M.Gorkogo, 50-24
Minsk, 220103(SU)
Erfinder: UDAROV, Boris Gavrilovich
ul. Yakuba Kolasa, 72-39
Minsk, 220090(SU)
Erfinder: TIKHONOVA, Tatyana Sergeevna
ul. Aktjubinskaya, 3-5
Gorky, 603028(SU)
Erfinder: POLYAKOVA, Nina Petrovna
pl. Svobody, 4-85
Gorky, 603006(SU)
Erfinder: PAKLIN, Sergei Ivanovich
ul. Malaya Filevskaya, 66-30
Moscow, 121433(SU)

(74) Vertreter: von Füner, Alexander, Dr. et al
Patentanwälte v. Füner, Ebbinghaus, Finck
Mariahilfplatz 2 & 3
D-8000 München 90(DE)

(54) ## VERFAHREN ZUR STERILISATION DER STAUBBEUTEL VON PFLANZEN.

(57) Die vorliegende Erfindung bezieht sich auf die Landwirtschaft.
Das Verfahren zur Sterilisation der Staubbeutel von Pflanzen sieht die Behandlung der Pflanzen mit einem

EP 0 358 762 A1

Sterilisationsmittel in Verbindung mit einem Verdünner in der fünften und/oder sechsten Periode der Organogenese vor. Als Sterilisationsmittel dienen erfindungsgemäß terpenoide Verbindungen der allgemeinen Formel $H_3$

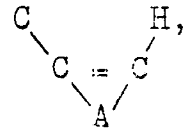

worin A für 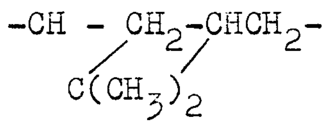 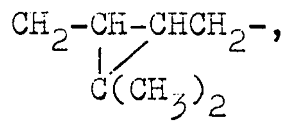

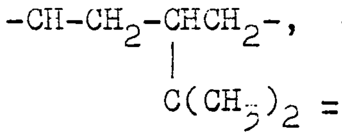 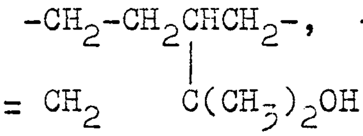 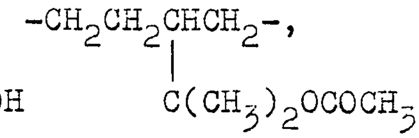

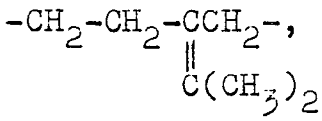 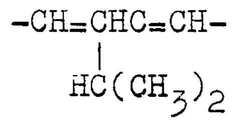

steht, oder ihre Mischungen.

Das angemeldete Verfahren findet in der Selektion und im Samenbau seine Anwendung.

# VERFAHREN ZUR STERILISATION DER STAUBBEUTEL VON PFLANZEN

## Gebiet der Technik

Die vorliegende Erfindung bezieht sich auf die Biologie und Landwirtschaft und betrifft insbesondere ein Verfahren zur Sterilisation der Staubbeutel von Pflanzen.

## Zugrundeliegender Stand der Technik

Hautzutage wird in der Welt die Aufgabe gelöst die Landwirtschaft zu intensivieren, insbesondere die Ertragsfähigkeit von Getreide-, Futter-, Gemüse- und technischen Kulturen durch eine breite Verwendung von Hybriden der ersten Generation zu steigern. Wegen ihrer Hybridkraft unterscheiden sich die Hybride von den Elternformen durch eine höhere Leistung (um 25 bis 30 %) und eine bessere Produktqualität. Es besteht ein Verfahren zur Erzeugung von neuen Hybriden, welches auf einem System "zytoplasmatische Pollensterilität - Restorer der Fertilität" beruht. Diesem Verfahren liegt eine mehrere Jahre lang (innerhalb von 12 bis 14 Jahren) dauernde und komplizierte Selektionsarbeit zugrunde, die das Schaffen von sterilen Analoga, Fixatoren der Sterilität und Restorern der Fertilität umfaßt. Besonders aussichtsreich sind Verfahren, die auf der Sterilisation der Staubbeutel von Pflanzen mit chemischen Sterilisationsmitteln (Gametoziden) basieren. Die Verwendung von Gametoziden ist bedeutend wirtschaftlicher als die des Systems "zytoplasmatische Pollensterilität", weil die Notwendigkeit entfällt, solche Formen wie steriles Analogon, Analoga für die Fixierung der Sterilität bei mütterlichen Formen und für die Restauration der Fertilitat bei väterlichen Formen zu erzeugen. Man kann praktisch die Samen von Hybriden der ersten Generation sowohl im Laufe der Selektionsforschung von Ausgangsformen, als auch bei der Organisation ihrer technischen Herstellung gewinnen.

Zur Zeit sind etwa 200 Verbindungen gefunden, welche eine gametozide Aktivität besitzen und ihrer chemischen Struktur nach zu verschiedenen Klassen von chemischen Verbindungen gehören. Gametozide müssen nach Möglichkeit eine volle Pollensterilität bei behandelten Pflanzen unter Erhaltung der Lebensfähigkeit von Eizellen bewirken und eine

ausreichend hohe Fähigkeit (mindestens 70% der Kontrolle), den Fruchtknoten unter freier Bestäubung zu bilden, sicherstellen. Die Werte ihrer Phytotoxizität und Toxizität für Warmblüter müssen minimal sein.

Es sind Verfahren zur Sterilisation der Staubbeutel von Getreidekulturen (L.Dzh.Nikell "Regulatury rosta rasteny. Primenenie v selskom khozyaistve", Moskva, izdatelstvo "Kolos", 1984, S. 28 bid 31; SU, A, 906457, deutsch L.J.Nikell, "Wachstumsregulatoren von Pflanzen. Anwendung in der Landwirtschaft", Moskau, Verlag "Kolos", 1984, S. 28 bis 31) bekannt, welche in der Behandlung von Pflanzen mit Sterilisationsmitteln wie 2-Chloräthylphosphonsäure (Ethrel), Maleinsäurehydrazid, Di-(polyfluoralkul)-phosphorsäuren und ihre Salze u.a. bestehen. Die Behandlung der Pflanzen mit Sterilisationsmitteln erfolgt in der V. oder VI. Periode der Organogenese (nach F.Kupermann).

In der V. Periode der Organogenese setzen die Prozesse der Bildung und der Differenzierung von Blüten ein. Gegen Ende dieser Periode entstehen Neubildungen, sporogene Archesporgewebe. Während dieser Periode kommt es zur Anlegung von Staubblättern, Stempel und Blütenhülle. In der V. Periode tritt die Differenzierung des Höckers von Staubblättern in Staubfaden und Stempel in Erscheinung. Die VI. Periode ist durch Ablauf der Prozesse der Blütenbildung (Mikro- und Makrosporogenese) gekennzeichnet. In dieser Periode werden gesonderte einkernige Pollenkörner gebildet (F.M.Kupermann, "Morfofiziologia rasteny", Moskva, izdatelstvo "Vysshaya shkola", 1973, S. 30 bis 36, deutsch "Morphophysiologie von Pflanzen", Moskau, Verlag "Vysshaya shkola", 1973, S. 30 bis 36).

Es ist weiter ein Verfahren zur Sterilisation der Staubbeutel von Graspflanzen (GB, A, 1567153) bekannt, das darin besteht, daß man die Behandlung von Graspflanzen mit einem Sterilisationsmittel in der Periode durchführt, die zwischen Auftreten des zweiten Stengelglieds und Ährenschieben liegt. Als Sterilisationsmittel benutzt man heterozyklische Verbindungen, deren Hauptvertreter 2-Karboxy-3,4-methanpyrrolidin oder 2-Methoxykarbonyl-3,4-methan-

pyrrolidin sind. Die angegebenen Verbindungen werden in Kombination mit Verdünnungsmitteln und oberflächenaktiven Stoffen eingesetzt.

Offenbarung der Erfindung

Der Erfindung liegt die Aufgabe zugrunde, durch die Auswahl von neuen Sterilisationsmitteln ein Verfahren zu entwickeln, das zur Sterilisation von Staubbeuteln eines breiten Spektrums von Kulturen mit hohem Sterilisationsgrad unter Erzielung der hohen Fähigkeit von Samen, Fruchtansätze bei freier Bestäubung zu bilden, verwendet werden kann.

Die Aufgabe ist dadurch gelöst, daß in einem Verfahren zur Sterilisation der Staubbeutel von Pflanzen durch ihre Behandlung mit einem Sterilisationsmittel in Verbindung mit einem Verdünner in der fünften und/oder sechsten Periode der Organogenese erfindungsgemäß als Sterilisationsmittel terpenoide Verbindungen der allgemeinen Formel

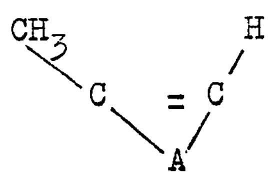

, worin

A für 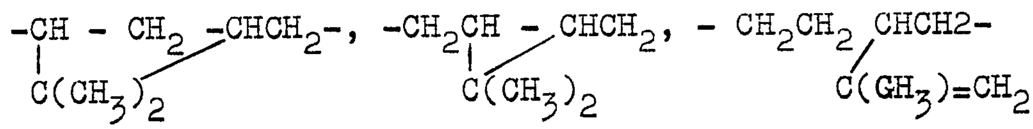

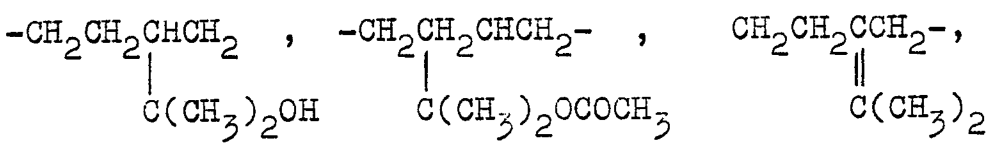

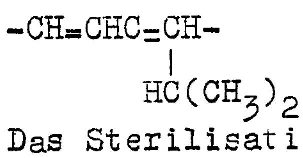

steht, oder ihre Mischungen dienen.

Das Sterilisationsmittel kann in Verbindung mit einem beliebigen bekannten und dazu geeigneten Verdünner verwendet werden. Zweckmäßigerweise wird es in Verbindung mit Wasser als eine 0,1 - bis 2%ige wäßrige Emulsion benutzt. Als Pflanzen, die mit dem angegebenen Sterilisationsmittel behandelt werden, dienen bevorzugt Graspflanzen oder Sonnenblume.

Das erfindungsgemäße Verfahren ermöglicht es, die männliche Sterilität von Pflanzen (98 bis 100 %) zu erzielen und einen hohen Prozentsatz (über 70 %) der Fähigkeit zur Samenbildung zu erhalten. Zwecks Erzielung eines hohen Sterilisationsgrades von Staubbeuteln unter ungünstigen Klimabedingungen wird die Behandlung von Pflanzen mit dem Sterilisationsmittel in der fünften und/oder sechsten Periode der Organogenese (nach Kupermann) wiederholt.

Beste Durchführungsvariante der Erfindung

Das erfindungsgemäße Verfahren wird wie folgt durchgeführt.

Pflanzen wie, z.B. Winter- und Sommerweizen, diploider und tetraploider Roggen, Tritikale, Hirse, Sonnenblume, werden mit einem Sterilisationsmittel behandelt, wobei als solches terpenoide Verbindungen der allgemeinen Formel

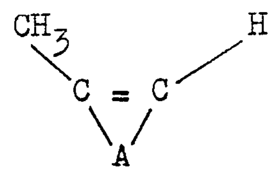 , worin

A für 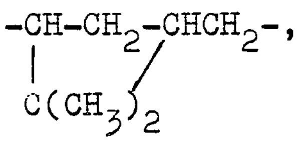, 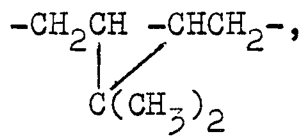, 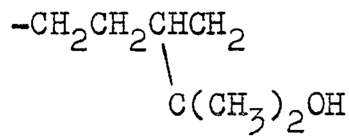

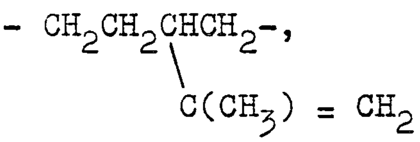 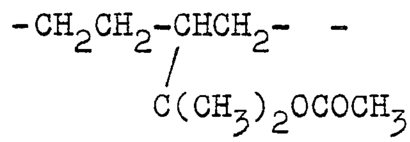

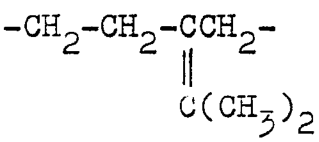 , 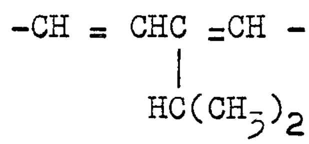

steht, oder ihre Mischungen dienen.

Terpenoide Verbindungen können in Kombination mit beliebigen geeigneten Verdünnern verwendet werden. Als Verdünner wird Wasser zweckmäßigerweise benutzt. Dabei wird eine 0,1- bis 2%ige wäßrige Emulsion der angegebenen Verbindungen vorteilhafterweise verwendet.

Man kann den gebrauchsfertigen Lösungen beliebige geeignete oberflächenaktive Stoffe wunschgemäß zusetzen. Beim

Aufbringen auf die Pflanzen werden gewöhnlich den gebrauchsfertigen Lösungen beliebige bekannte Hilfszusätze wie Netzmittel, Dispergiermittel und Adhäsionsmittel zweckmäßigerweise hinzugeführt.

Das Sterilisationsmittel läßt sich auf Pflanzen nach verschiedenen Behandlungsverfahren wie Flüssigkeitszerstäubung und Luftzerstäubung (Aerosole) aufbringen. Die Behandlung von Pflanzen mit dem Sterilisationsmittel erfolgt in der fünften und/oder sechsten Periode der Organogenese (nach Kupermann). Die Aufwandmenge des Sterilisationsmittels hängt von der Natur der Verbindung, der zu behandelnden Kultur, der Behandlungsperiode und natürlichen Klimafaktoren ab. Um einen hohen Sterilisationseffekt unter ungünstigen Klimabedingungen sicherzustellen, ist es zweckmäßig, die wiederholte Behandlung von Pflanzen in der VI. Periode der Organogenese durchzuführen. Die Gesamtdosis des Sterilisationsmittels beträgt 0,6 bis 20 kg/ha.

Alle erfindungsgemäßen terpenoiden Verbindungen, die als Sterilisationsmittel zur Verwendung kommen, waren auf die Toxizität im Tierversuch geprüft. Die Prüfergebnisse haben gezeigt, daß die angegebenen Verbindungen schwach toxisch oder praktisch nichttoxisch sind.

So beträgt, zum Beispiel, $LD_{50}$ 4300 mg/kg bei $\alpha$--Terpeniol und 3700 mg/kg bei $\alpha$-Pinen.

Alle erfindungsgemaßen terpenoiden Verbindungen kommen in der Natur vor und werden aus Terpentin von Nadelhölzern gewonnen.

Die gametozide Aktivität der erfindungsgemäßen Sterilisationsmittel war im Feldversuch in verschiedenen bodenklimatischen Zonen mit Teilstücken von 10 $m^2$ Größe in zwei-, drei- und viermaliger Wiederholung festgestellt. Jedes Sterilisationsmittel wurde mindenstens 5 Jahre lang geprüft.

Die Entwicklung der Perioden der Organogenese wird zytologisch überwacht. Die Behandlung von Pflanzen mit dem Sterilisationsmittel erfolgt am Anfang der fünften Periode der Organogenese nach Kupermann.

Mit dem Ährenschieben verwirklicht man die Isolierung

von Hauptähren und anderen Stockwerken in Pergamentbeuteln. Bei Weizen und Tritikale werden Einzelisolatoren benutzt. Bei Roggen schließt man je Ähre 5 bis 7 verschiedene nebeneinander befindliche Pflanzen unter einen gemeinsamen Isolator ein. Bei Hirse wird jede Rispe getrennt isoliert. Der Sterilitätsprozentsatz (X) für Weizen, Roggen, Tritikale und Hirse wird nach der Formel

$$X = \left( I - \frac{\text{Anzahl der in einem Isolator befruchteten Samen von behandelten Pflanzen}}{\text{Anzahl der in einem Isolator befruchteten Samen von unbehandelten Kontrollpflanzen}} \right) x\ 100\ \%$$

ermittelt.

Die Kornzahl in nicht isolierten Ähren von Kontrollpflanzen wird bedingt für 100 % Ansetzen bei freier Bestäubung angenommen.

Um zuverlässige Angaben zu erhalten, verwendet man 20 bis 25 Isolatoren jeder Wiederholung für Weizen und Tritikale, 10 bis 15 Isolatoren jeder Wiederholung für Roggen und Hirse.

Zur Kontrolle der chemischen Sterilisation des Sonnenblumenpollens werden für jede Verbindung 45 behandelte Pflanzen jeder Wiederholung benutzt, wobei 15 Pflanzen von denen zwecks Selbstbestäubung isoliert werden, Blütenkörbchen anderer 15 Pflanzen mit einem Pollengemisch, gesammelt von 20 bis 25 behandelten isolierten Körbchen, bestäubt werden, und 15 Pflanzen für freie Bestäubung gelassen werden, damit das Ansetzen von Achänen mit dem Pollen der väterlichen Form kontrolliert werden kann.

Man beurteilt die Pollensterilität von Pflanzen der Sonnenblume nach der Pollenfertilität und -keimfähigkeit, nach den morphologischen Besonderheiten von Spermien und nach der Fähigkeit von Achänen zum Ansetzen bei der Bestäubung der behandelten isolierten Pflanzen mit dem Pollen der unbehandelten väterlichen Form. Die Lebensfähigkeit der Eizelle wird nach der Samenbildung von behandelten Pflanzen bei freier Bestäubung mit der väterlichen Form bestimmt.

Es ist wünschenswert, die Behandlung von Pflanzen bei

heiterem windstillem Wetter durchzuführen. Alle Verbindungen dringen in Gewebe der Pflanzen innerhalb von 4 Stunden durch. Im Falle der Niederschläge innerhalb dieser 4 Stunden ist es notwendig, Pflanzen in der VI. Periode der Organogenese wiederholt zu behandeln.

Zum besseren Verstehen der vorliegenden Erfindung werden folgende Durchführungsbeispiele des erfindungsgemäßen Verfahrens angeführt.

Beispiel 1 bis 6

Pflanzen des Winterweizens Sorte Mironowskaja 808 werden in der V. Periode der Organogenese (nach Kupermann) durch Zerstäubung der 2%igen wäßrigen Emulsion folgender Sterilisationsmittel mit Hilfe einer Rückenspritze behandelt: 1-p-Menthen-8-Ol, 1-p-Menthenyl-8-azetat, 3-Karen, 1,4(8)-p-Menthadien, 1,8-p-Menthadien bzw. p-Zymol. Als Emulgiermittel wird 0,1 Masse% Kalziumalkylbenzolsulfonat mit 12 bis 14 Kohlenstoffatomen hinzugefügt. Als Adjuvans führt man in die Emulsion 0,01 Masse% Dodezylsulfat. Der Verbrauch an Präparat beträgt 12 kg/ha. Als Kontrolle dienen Pflanzen, behandelt mit einem Verdünner ohne Sterilisationsmittel. Die Prüfergebnisse sind in der Tabelle 1 angeführt. Die ahnlichen Ergebnisse sind bei der Behandlung von Pflanzen in der VI. Periode der Organogenese erhalten.

Tabelle 1

| lfd. Nr. | Beispiel Nr. | Anzahl non Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | Kontrolle | 40,6 | 0,0 | 42,6 | 100,0 |
| 2 | Beispiel 1 | 0,0 | 100,0 | 40,1 | 94,1 |
| 3 | Beispiel 2 | 0,0 | 100,0 | 38,8 | 91,1 |
| 4 | Beispiel 3 | 0,0 | 100,0 | 39,7 | 93,2 |
| 5 | Beispiel 4 | 0,6 | 98,5 | 40,2 | 94,4 |
| 6 | Beispiel 5 | 3,8 | 90,7 | 41,8 | 98,1 |
| 7 | Beispiel 6 | 0,7 | 98,3 | 39,9 | 93,7 |

Beispiele 7 bis 13

Pflanzen des Sommerweizens Sorte Moskowskaja 35 werden in der VI. Periode der Organogenese mit 1%iger wäßriger Emulsion folgender Sterilisationsmittel behandelt: α-Terpeniol, 1-p-Menthenyl-8-azetat, 3-Karen, 1,4(8)-p--Menthadien, 1,8-p-Menthadien p-Zymol bzw. α -Pinen. Die Emulsion enthält als Emulgiermittel 0,1 Masse% Kalziumalkylbenzolsulfonat mit 12 bis 14 Kohlenstoffatomen und als Adjuvans 0,01 Masse% N,N-Dimethylformamid. Der Verbrauch an Präparat beträgt 8 kg/ha. Als Kontrolle dienen Pflanzen, behandelt mit einem Verdünner ohne Sterilisationsmittel. Die Prüfergebnisse sind in der Tabelle 2 angegeben. Die ähnlichen Ergebnisse sind bei der Behandlung von Pflanzen in der V. Periode der Organogenese erhalten.

Tabelle 2

| lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | Kontrolle | 29,4 | 0,0 | 3I,2 | IOO,0 |
| 2 | Beispiel 7 | 0,0 | IOO,0 | 27,2 | 87,2 |
| 3 | Beispiel 8 | 0,0 | IOO,0 | 28,6 | 9I,7 |
| 4 | Beispiel 9 | 0,2 | 99,3 | 29,0 | 92,9 |
| 5 | Beispiel IO | 0,0 | IOO,0 | 28,I | 90,I |
| 6 | Beispiel II | 0,8 | 97,3 | 30,0 | 96,2 |
| 7 | Beispiel I2 | I,2 | 95,9 | 27,3 | 87,5 |
| 8 | Beispiel I3 | 0,0 | IOO,0 | 28,7 | 9I,0 |

Beispiel 14 bis 20

Pflanzen des Sommerweizens Sorte Botanitscheskaja 4 werden in der V. Periode der Organogenese mit 1%iger wäßriger Emulsion folgender Sterilisationsmittel behandelt: 3-Karen, p-Zymol, α -Pinen, α -Terpeniol, 1,4(8)-p-Menthadien, 1,8-p-Menthadien bzw. 1-p-Menthenyl-8-azetat. Die Emulsion enthält 0,1 Masse% Kalziumalkylbenzolsulfonat mit 12 bis 14 Kohlenstoffatomen als Emulgiermittel und 0,01 Masse% Tetrahydrofuran als Adjuvans. Der Verbrauch an

Präparat beträgt 6 kg/ha. Als Kontrolle dienen Pflanzen, behandelt analog zu Beispiel 1. Die Prüfergebnisse sind in der Tabelle 3 angegeben. Die ähnlichen Ergebnisse sind bei der Behandlung von Pflanzen in der VI. Periode der Organogenese erhalten.

Tabelle 3

| lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | Kontrolle | 28,9 | 0,0 | 30,9 | I00,0 |
| 2 | Beispiel 14 | 0,0 | 100,0 | 27,8 | 90,0 |
| 3 | Beispiel 15 | I,2 | 95,9 | 30,I | 97,4 |
| 4 | Beispiel 16 | 0,0 | I00,0 | 29,2 | 94,5 |
| 5 | Beispiel 17 | 0,0 | I00,0 | 28,4 | 9I,9 |
| 6 | Beispiel 18 | 0,0 | I00,0 | 29,5 | 95,5 |
| 7 | Beispiel 19 | 0,8 | 97,2 | 27,3 | 88,3 |
| 8 | Beispiel 20 | 0,0 | I00,0 | 29,5 | 95,5 |

Beispiele 21 bis 23

Pflanzen von diploidem Roggen Sorte Tschulpan werden in der VI. Periode der Organogenese (nach Kupermann) durch Zerstäubung der 1%igen wäßrigen Emulsion von 1,4(8)-p-Menthadien, 1,8-p-Menthadien oder p-Zymol mit Hilfe einer Rückenspritze behandelt. Die Emulsion enthält 0,1 Masse% Kalziumalkylbenzolsulfonat mit 12 bis 14 Kohlenstoffatomen und 0,0l Masse% Dodezylsulfat. Der Verbrauch an Sterilisationsmittel beträgt 10 kg/ha. Als Kontrolle dienen Pflanzen, behandelt analog zu Beispiel 1. Die Prüfergebnisse sind in der Tabelle 4 angegeben. Die ähnlichen Ergebnisse sind bei der Behandlung von Pflanzen in der V. Periode der Organogenese erhalten.

Tabelle 4

| lfd. Nr. | Beispiel Nr. | Anzahl von Körnern der Ähre im Isolator | Prozentsatz der Sterilitat | Anzahl von Körnern der Ähre bei freier Bestäubung | Prozentsatz des Ansetzens von Körnern bei freier Bestäubung |
|---|---|---|---|---|---|
| 1. | Kontrolle | 44,I | 0,0 | 49,6 | I00,0 |
| 2. | Beispiel 21 | 0,8 | 97,8 | 47,8 | 96,4 |
| 3 | Beispiel 22 | 0,3 | 99,2 | 43,2 | 87,I |
| 4 | Beispiel 23 | 0,0 | I00,0 | 47,4 | 95,6 |

Beispiele 24 bis 27

Pflanzen von tetraploidem Roggen Sorte Ukrainskaja tetra werden ähnlich wie im Beispiel 1 behandelt. Man verwendet 1%ige waßrige Emulsion folgender Sterilisationsmittel: 2-Pinen, $\alpha$- Terpiniol, Terpenylazetat, 3-Karen. Der Verbrauch an Sterilisationsmittel beträgt 8 kg/ha. Als Kontrolle dienen Pflanzen, behandelt mit einem Verdünner ohne Sterilisationsmittel. Die Prüfergebnisse sind in der Tabelle 5 angegeben.

Tabelle 5

| lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1. | Kontrolle | 28,0 | 0,0 | 36,8 | I00,0 |
| 2 | Beispiel 24 | 0,0 | I00,0 | 36,3 | 98,6 |
| 3 | Beispiel 25 | 0,4 | 98,6 | 33,8 | 9I,8 |
| 4 | Kontrolle | 36,I | 0,0 | 40,2 | I00,0 |
| 5 | Beispiel 26 | 0,0 | I00,0 | 32,8 | 8I,6 |
| 6 | Beispiel 27 | 0,I | 99,6 | 37,3 | 92,8 |

Beispiele 28 und 29

Pflanzen von diploidem Roggen Sorte Charkowskaja 55 werden ähnlich wie im Beispiel 1 mit 1%iger wäßriger Emulsion folgender Sterilisationsmittel behandelt: Terpentylazetat bzw. 3-Karen. Der Verbrauch an Sterilisationsmittel beträgt 6 kg/ha. Die Prüfergebnisse sind in der Tabelle 6 angegeben.

Tabelle 6

| lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | Kontrolle | 31,5 | 0,0 | 39,4 | 100,0 |
| 2 | Beispiel 28 | 0,1 | 99,7 | 35,2 | 89,3 |
| 3 | Beispiel 29 | 0,6 | 98,1 | 36,7 | 93,1 |

Beispiele 30 und 31

Pflanzen von Tritikale Sorte PRAG 109 werden ähnlich wie im Beispiel 1 in der V. Periode der Organogenese mit 2%iger wäßriger Emulsion folgender Sterilisationsmittel behandelt: Terpenylazetat bzw. 3-Karen. Der Verbrauch an Sterilisationsmittel beträgt 12 kg/ha. Die Prüfergebnisse sind in der Tabelle 7 angegeben. Die ähnlichen Ergebnisse sind bei der Behandlung von Pflanzen in der VI. Periode der Organogenese erhalten.

Tabelle 7

| lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | Kontrolle | 41,3 | 0,0 | 45,8 | 100,0 |
| 2 | Beispiel 32 | 0,0 | 100,0 | 40,9 | 89,3 |
| 3 | Beispiel 33 | 0,3 | 99,3 | 37,6 | 82,1 |

Beispiele 32 und 33

Pflanzen von Tritikale Sorte Amphidiploid 206 werden ähnlich wie im Beispiel 1 in der VI. Periode der Organogenese mit 2%iger wäßriger Emulsion folgender Sterilisationsmitteln: Terpenylazetat bzw. 3-Karen behandelt. Der Verbrauch an Sterilisationsmittel beträgt 12 kg/ha. Die Prüfergebnisse sind gegenüber Kontrolle in der Tabelle 8 angegeben. Die ähnlichen Ergebnisse sind bei der Behandlung von Pflanzen in der V. Periode der Organogenese erhalten.

Tabelle 8

| lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | Kontrolle | 23,4 | 0,0 | 25,2 | 100,0 |
| 2 | Beispiel 32 | 0,4 | 97,8 | 23,0 | 91,3 |
| 3 | Beispiel 33 | 0,0 | 100,0 | 23,8 | 94,4 |

Beispiele 34 bis 39

Pflanzen der Hirse Sorte Mironowskoe 94 werden ähnlich wie im Beispiel 1 in der V. Periode der Organogenese mit 1%iger wäßriger Emulsion folgender Sterilisationsmittel behandelt: Terpenylazetat, 3-Karen, 1,4(8)-p-Menthadien, 1,8-p-Menthadien, p-Zymol bzw. α-Terpeniol. Der Verbrauch an Sterilisationsmittel beträgt 10 kg/ha. Die Prüfergebnisse sind in der Tabelle 9 gegenüber Kontrolle angegeben. Die ähnlichen Ergebnisse sind bei der Behandlung von Pflanzen in der VI. Periode der Organogenese erhalten.

Tabelle 9

| lfd. Nr. | Beispiel Nr. | Anzahl von Körnern der Hirse im Isolator | Prozentsatz der Sterilität | Anzahl von Körnern der Hirse bei freier Bestäubung | Prozentsatz des Ansetzens von Körnern bei freier Bestäubung |
|---|---|---|---|---|---|
| 1 | Kontrolle | 124,9 | 0,0 | 145,4 | I00,0 |
| 2 | Beispiel 34 | 0,0 | I00,0 | 138,9 | 95,5 |
| 3 | Beispiel 35 | 0,0 | I00,0 | 89,I | 62,3 |
| 4 | Beispiel 36 | 0,0 | I00,0 | 137,3 | 89,6 |
| 5 | Beispiel 37 | 0,0 | I00,0 | 109,0 | 71,1 |
| 6 | Beispiel 38 | 0,0 | I00,0 | 107,3 | 70,0 |
| 7 | Beispiel 39 | 0,0 | I00,0 | 128,5 | 86,0 |

Beispiel 40

Pflanzen des Sommerweizens Sorte Botanitscheskaja 4 werden ähnlich wie im Beispiel 1 in der VI. Periode der Organogenese mit 1%iger wäßriger Emulsion der Mischung folgender Sterilisationsmittel behandelt: 1,4(8)-p-Menthadien und p-Zymol, genommen im Verhältnis von 1:1. Der Verbrauch der Mischung von Sterilisationsmitteln beträgt 6 kg/ha. Die Prüfergebnisse sind in der Tabelle 10 angegeben. Die ähnlichen Ergebnisse sind bei der Behandlung von Pflanzen in der V. Periode der Organogenese erhalten.

Tabelle 10

| lfd. Nr. | Behandlung von Pflanzen | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | Kontrolle | 28,9 | 0,0 | 30,9 | I00,0 |
| 2 | Mischung von Sterilisationsmitteln | 0,0 | I00,0 | 27,4 | 88,7 |

Beispiel 41

Pflanzen des Sommerweizens Sorte Rodina werden ähnlich wie im Beispiel 1 in der VI. Periode der Organogenese mit 1%iger wäßriger Emulsion der Mischung von Sterilisationsmitteln behandelt: 3-Karen und α -Terpeniol im Verhältnis von 1:1. Der Verbrauch an Mischung von Sterilisationsmitteln beträgt 6 kg/ha. Die Prüfergebnisse sind in der Tabelle 11 angegeben. Die ähnlichen Ergebnisse sind bei der Behandlung von Pflanzen in der V. Periode der Organogenese erhalten.

Tabelle 11

| lfd. Nr. | Behandlung von Pflanzen | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | Kontrolle | 29,5 | 0,0 | 35,0 | 100,0 |
| 2 | Mischung von Sterilisationsmitteln | 0,0 | 100,0 | 29,4 | 84,0 |

Beispiele 42 bis 44

Pflanzen von diploidem Roggen Sorte Tschulpan werden ähnlich wie im Beispiel 1 in der VI. Periode der Organogenese mit 1%iger wäßriger Emulsion folgender Mischungen von Sterilisationsmitteln behandelt: 2-Pinen mit 1,8-Menthadien (im Verhältnis von 1:1), Terpenylazetat mit p-Zymol (im Verhältnis von 1:1), 3-Karen mit Terpenylazetat (im Verhältnis von 1:1). Der Verbrauch an Mischung von Sterilisationsmitteln beträgt 6 kg/ha. Die Prüfergebnisse sind in der Tabelle 12 angegeben. Die ähnlichen Ergebnisse sind bei der Behandlung von Pflanzen in der V. Periode der Organogenese erhalten.

Tabelle 12

| lfd. Nr. | Beispiel Nr. | Anzahl von Körnern der Ähre im Isolator | Prozentsatz der Sterilität | Anzahl von Körnern der Ähre bei freier Bestäubung | Prozentsatz des Ansetzens von Körnern bei freier Bestäubung |
|---|---|---|---|---|---|
| 1 | Kontrolle | 44,5 | 0,0 | 46,6 | 100,0 |
| 2 | Beispiel 42 | 0,0 | 100,0 | 43,3 | 92,9 |
| 3 | Beispiel 43 | 0,0 | 100,0 | 38,0 | 81,5 |
| 4 | Beispiel 44 | 0,0 | 100,0 | 46,2 | 99,2 |

Beispiele 45 bis 48

Pflanzen der Sonnenblume Sorte Peredowik und Linie BK-119 werden ähnlich wie im Beispiel 1 in der V. Periode der Organogenese mit 0,2%iger wäßriger Emulsion folgender Sterilisationsmittel α -Terpeniol bzw. 3-Karen behandelt. Der Verbrauch an Sterilisationsmitteln beträgt 1,2 kg/ha. Die Prüfergebnisse sind in der Tabelle 13 angegeben.

Tabelle 13

| lfd. Nr. | Beispiel Nr. | Prozentsatz des Ansetzens von Achänen bei Bestäubung mit Pollenmischung im Isolator | Prozentsatz des Ansetzens bei freier Bestäbung | Masse von 1000 Achänen in g | Anzahl steriler Pflanzen in % | Ölgehalt von Achänen in % | Keimfähigkeit von Achänen in % |
|---|---|---|---|---|---|---|---|
| | Sonnenblume Sorte Peredowik | | | | | | |
| 1 | Kontrolle | 85,0 | 85,0 | 84,0 | 0,0 | 54,7 | 100,0 |
| 2 | Beispiel 45 | 0,0 | 80,0 | 82,3 | 100,0 | 53,4 | 100,0 |
| 3 | Beispiel 46 | 0,0 | 85,3 | 84,0 | 100,0 | 53,6 | |
| | Sonnenblume Linie BK 119 | | | | | | |
| 4 | Kontrolle | 72,6 | 85,0 | 60,0 | 0,0 | 51,0 | 100,0 |
| 5 | Beispiel 47 | 0,0 | 80,4 | 55,4 | 100,0 | 49,4 | 100,0 |
| 6 | Beispiel 48 | 0,0 | 82,5 | 56,7 | 100,0 | 51,7 | 100,0 |

Industrielle Anwendbarkeit

Das angemeldete Verfahren findet in der Selektion und im Samenbau zur Gewinnung hochproduktiver Sorten und Hybride landwirtschaftlicher Kulturen seine Anwendung.

PATENTANSPRÜCHE :

1. Verfahren zur Sterilisation der Staubbeutel von Pflanzen durch ihre Behandlung mit einem Sterilisationsmittel in Verbindung mit einem Verdünner in der fünften und/oder sechsten Periode der Organogenese, dadurch gekennzeichnet, daß als Sterilisationsmittel terpenoide Verbindungen der allgemeinen Formel

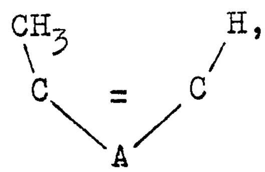

, worin

A für

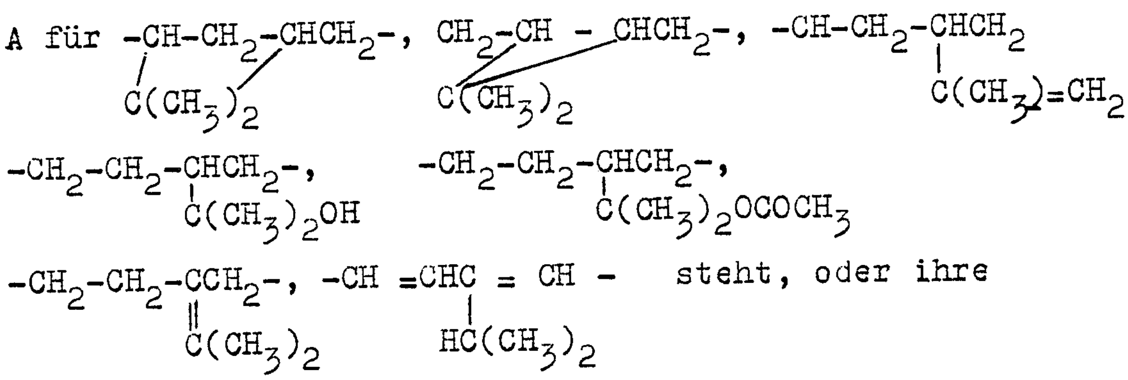

steht, oder ihre Mischungen dienen.

2. Verfahren nach Anspruch 1, dadurch gekennzeichnet, daß die angegebenen terpenoiden Verbindungen in Kombination mit Wasser als Verdünner in Form einer 0,1- bis 2%igen wäßrigen Emulsion verwendet werden.

3. Verfahren nach Ansprüchen 1 und 2, dadurch gekennzeichnet, daß als mit Sterilisationsmittel zu behandelnde Pflanzen Graspflanzen und Sonnenblume dienen.

4. Verfahren nach Ansprüchen 1 bis 3, dadurch gekennzeichnet, daß zwecks Erzielung eines hohen Sterilisationsgrades von Staubbeuteln unter ungünstigen Klimabedingungen eine wiederholte Behandlung von Pflanzen mit dem Sterilisationsmittel in der fünften und/oder sechsten Periode der Organogenese vorgenommen wird.

ABGEÄNDERTE PATENTANSPRÜCHE NACH DER INTERNATIONELEN ANMELDUNG PCT/SU 88/00062

1. (Abgeändert). Verfahren zur Sterilisation der Staubbeutel von Pflanzen durch ihre Behandlung mit einem Sterilisationsmittel in Verbindung mit einem Verdünner in der fünften und/oder sechsten Periode der Organogenese, dadurch gekennzeichnet, daß als Sterilisationsmittel terpenoide Verbindungen der allgemeinen Formel

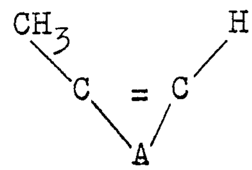

worin

A =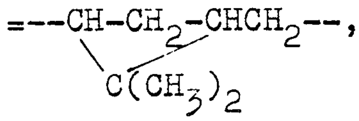,

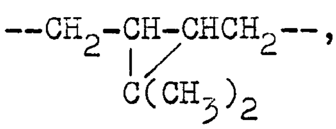, 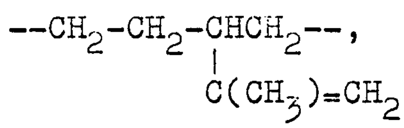,

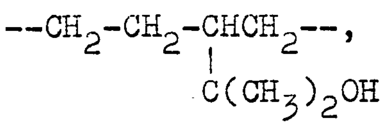, 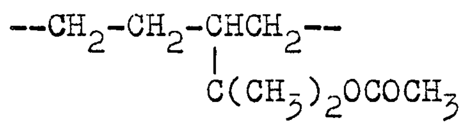

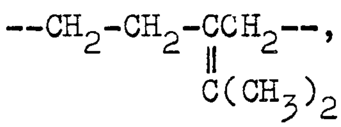, 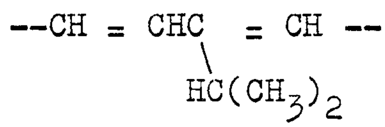

steht oder ihre Mischungen dienen.

2. Verfahren nach Anspruch 1, dadurch gekennzeichnet, daß die angegebenen terpenoiden Verbindungen in Kombination mit Wasser als Verdünner in Form einer 0,1 - bis 2%igen wäßrigen Emulsion verwendet werden.

3. Verfahren nach Ansprüchen 1 und 2, dadurch gekennzeichnet, daß als mit Sterilisationsmittel zu behandelnde Pflanzen Graspflanzen und Sonnenblume dienen.

4. Verfahren nach Ansprüchen 1 bis 3, dadurch gekennzeichnet, daß zwecks Erzielung eines hohen Sterilisationsgrades von Staubbeuteln unter ungünstigen Klimabedingungen eine wiederholte Behandlung von Pflanzen mit dem Sterilisationsmittel in der fühften und/oder sechsten Periode der Organogenese vorgenommen wird.

# INTERNATIONAL SEARCH REPORT

International Application No PCT/SU 88/00062

**I. CLASSIFICATION OF SUBJECT MATTER** (if several classification symbols apply, indicate all) [6]

According to International Patent Classification (IPC) or to both National Classification and IPC

$IPC^4$ A01N 37/02, 27/00, 31/04

**II. FIELDS SEARCHED**

Minimum Documentation Searched [7]

| Classification System | Classification Symbols |
|---|---|
| $IPC^4$ | A01N 37/02, 27/00, 31/04;A01H 1/04;A01N 37/36 |

Documentation Searched other than Minimum Documentation to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | EP, A3, 0133155 (CIBA-GEIGY AG) 13 February 1985 (13.02.85) see pages 35-37,43 | 1 |
| A | GB, A, 2102782 (Ciba-Geigy AG) 09 February 1983 (09.02.83) see pages 1,12-14,16 | 1 |
| A | SU, A1, 640711 (Vsesojuzny ordena Lenina i ordena Druzhby narodov nauchno-issledivatelsky institut rastenievodstva im N.N. Vavilova Vsesojuznoi ordena Lenina akademii selskokhozyaistvennykh nauk im V.I. Lenina et al.) 08 January 1979 (08.01.79) | 1-3 |
| A | SU, A1, 635926 (Vsesojuzny ordena Lenina i ordena Druzhby narodov nauchno-issledovatelskogo instituta rastenievodstva im N.N. Vavilova et al.) 10 December 1978 (10.12.78) | 1-3 |
| | ./. | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 10 October 1988 (10.10.88) | 16 December 1988 (16.12.88) |
| **International Searching Authority** | **Signature of Authorized Officer** |
| ISA/SU | |

| III. DOCUMENTS CONSIDERED TO BE RELEVANT (CONTINUED FROM THE SECOND SHEET) | | |
|---|---|---|
| Category * | Citation of Document, with indication, where appropriate, of the relevant passages | Relevant to Claim No |
| A | SU, A3, 965337 (Shell International Research Maatschappij B.V.) 07 October 1982 (07.10.82) | 1-4 |
| | Selektsia i semenovodstvo, Nr. 4, 1982 (Kolos, Moscow), P.V. Chiryaev "Indutsirovanie muzhskoi sterilnosti u podsolnechnika rastvorami gibberellina" pages 43,44 | 1,3 |